# EUROPEAN PATENT SPECIFICATION

(11) **EP 2 537 722 B1**
(45) Date of publication and mention of the grant of the patent: **24.06.2020**
(21) Application number: 12154365.6
(22) Date of filing: 08.02.2012
(51) Int. Cl.: B60T 7/04, B60T 11/18, G05G 1/46

(54) **Parking lock mechanism and working vehicle**
Parksperrmechanismus und Nutzfahrzeug
Mécanisme de verrouillage de parc et véhicule de travail

(30) Priority: 21.06.2011 JP 2011137589
(43) Date of publication of application: 26.12.2012
(73) Proprietor: ISEKI & CO., LTD., Matsuyama-shi Ehime-ken 799-2692 (JP)
(72) Inventor: Tamura, Kazuhisa, Iyo-gun, Ehime 791-2193 (JP); Okamoto, Suguru, Iyo-gun Ehime 791-2193 (JP); Enomoto, Wakao, Iyo-gun, Ehime 791-2193 (JP); Yoshiki, Shinya, Iyo-gun Ehime 791-2193 (JP)
(74) Representative: Grünecker Patent- und Rechtsanwälte PartG mbB

(56) References cited:
- EP-A2- 0 890 491
- WO-A2-02/12974
- US-A- 1 633 348
- US-A- 2 532 861
- US-A- 4 026 164
- US-A- 4 291 778
- US-A- 4 543 850

## Description

### Field of the Invention

The present invention relates to a parking lock mechanism and a working vehicle.

Conventionally, as a parking lock mechanism of a working vehicle, such as a tractor and a mower, a configuration which comprises a brake pedal mechanism and a lock lever for locking the brake pedal mechanism at a lock position thereof or for unlocking is disclosed. (see, for example, Japanese Patent Laid-Open No. 1996-11686. Hereinafter, it will be simply referred to as "patent document 1".) Such a parking loch mechanism is also known from US 4 291 778 A, which corresponds to the preamble of claim 1.

In the patent document 1, a brake pedal mechanism is locked by a step surface of the brake pedal mechanism being stepped on in a state that the lock lever is moved to a lock side. On the other hand, when the brake pedal mechanism is unlocked, the brake pedal mechanism is unlocked by the step surface of the brake pedal mechanism being stepped on in a state that the lock lever is operated by an unlocking side.

### SUMMARY OF THE INVENTION

### TECHNICAL PROBLEM

However, in the above-mentioned patent document 1, since it is necessary to operate the lock lever by hand and to operate the brake pedal mechanism with a foot, the operation is difficult.

In view of the above-mentioned problem of the conventional parking lock mechanism, the present invention has an object to provide a parking lock mechanism having a configuration in which a locking operation and an unlocking operation are easy, and a working vehicle using the parking lock mechanism.

### MEANS FOR SOLVING THE PROBLEMS

This invention adopts the following technical means, in order to solve the above-mentioned technical subject.
The 1^{st} aspect of the present invention is a parking lock mechanism (25) used when a working vehicle is parked, comprising:
   a step part for locking (26), which is disposed adjacent to a brake step surface part (24) of a brake pedal mechanism (23); and
   a lock unit which is connected to the step part for locking (26) and which locks the brake pedal mechanism (23) at a braking position thereof by the step part for locking (26) being stepped on.
   This makes it possible to lock or unlock by the step part for locking being operated on foot in a state where the brake pedal step unit is stepped on.
      In addition, this makes it possible for a worker to operate locking or unlocking only on foot in a state of sitting in a driver's seat.
The 2^{nd} aspect of the present invention is the parking lock mechanism according to the 1^{st} aspect of the present invention, wherein
   the step part for locking (26) is disposed adjacent to a front side edge among peripheral edges of the brake step surface part (24) on a basis of a direction of movement of the working vehicle.
   This makes it possible to lock or unlock by the step part for locking being operated on tiptoe in the state where the brake pedal step surface unit is stepped on.
   In addition, a wrong operation can be evaded since a lock is not performed even if a pedal is stepped on unconsciously.
The 3^{rd} aspect of the present invention is the parking lock mechanism according to the 2^{nd} aspect of the present invention, wherein
   the brake step surface part (24) is disposed in a right side of the working vehicle; and
   the step part for locking (26) is disposed at a left-leaning position of the brake step surface part (24).
   This makes it easy to step on the step part for locking since it can be stepped on by the thumb side of foot.
The 4^{th} aspect of the present invention is the parking lock mechanism according to any one of the 1^{st} to the 3^{rd} aspect of the present invention, wherein
   the lock unit has an engagement part (39) which engages with an engaged part (37) disposed on a frame of a main body of the working vehicle, and a linkage mechanism (31, 33, 35) which connects the engagement part (39) and the step part for locking (26); and
   the step part for locking (26), the engagement part (39)and the linkage mechanism (31, 33, 35) are held at a pedal lever (29) disposed below the brake step surface part (24).
   This makes it possible to lock or unlock by a simple configuration.
The 5^{th} aspect of the present invention is the parking lock mechanism according to the 4^{th} aspect of the present invention, wherein
   the linkage mechanism has a first pivot plate (31) which is connected to the step part for locking (26) in order to pivot the step part for locking (26), a second pivot plate (33) which is connected to the engagement part (39) in order to pivot the engagement part (39), and a connecting rod (35) which connects the first pivot plate (31) and the second pivot plate (33);
   the first pivot plate (31) is supported pivotally by a first pivot axis (32) fixed to an upper part of the pedal lever (29);
   the second pivot plate (33) is supported pivotally by a second pivot axis (34) fixed to a lower part of the pedal lever (29); and
   the connecting rod (35)is disposed along the pedal lever (29).
   This makes it possible to lock or unlock by a simple configuration.
The 6^{th} aspect of the present invention is the parking lock mechanism according to the 5^{th} aspect of the present invention, wherein
   the first pivot axis (32) is disposed at a projection part (292) which projects from a lever main body (291) of the pedal lever (29)
   This makes it possible to lock or unlock by a simple configuration.
The 7^{th} aspect of the present invention is the parking lock mechanism according to the 5^{th} aspect of the present invention, wherein
   a part (33a), which connects to the connecting rod (35), of the second pivot plate (33) is disposed at a front side from the second pivot axis (34).
   This makes it possible to lock or unlock by a simple configuration.
   In addition, the parking lock mechanism does not disturb an operation of a forward backward pedal.
The 8^{th} aspect of the present invention is a working vehicle, comprising:
   the parking lock mechanism (25) according to any one of the 1^{st} to the 7^{th} aspect of the invention;
   the brake pedal mechanism (23) which brakes the working vehicle; and
   a forward backward pedal mechanism (19, 27) which is disposed under the brake step surface part (24) in order to move the working vehicle forward or backward, wherein
   a pedal lever (29) of the brake pedal mechanism (23) is formed to curve with swelling out in a front direction; and
   the brake step surface part (24) is disposed at a upper end of the pedal lever (29).

This makes it possible for the parking lock mechanism not to disturb an operation of a forward backward pedal.

According to the present invention, it is possible to provide a parking lock mechanism having a configuration in which a lock operation and an unlocking operation are easy and a working vehicle using the parking lock mechanism.

### BRIEF DESCRIPTION OF THE DRAWINGS

Fig. 1A is a left-side configuration view illustrating a mower according to Embodiment 1 of the present invention;
Fig. 1B is a partial enlarged view of Fig 1A;
Fig. 2 is a partial enlarged view illustrating a vicinity of a right-side of a driver's seat of a mower
Fig. 3 is a right-side configuration view illustrating a vicinity of a brake mechanism of a mower according to Embodiment 1 of the present invention;
Fig. 4 is a left-side configuration view illustrating a brake mechanism of a mower according to Embodiment 1 of the present invention;
Fig. 5 is a front configuration view illustrating a vicinity of a brake step board part of a mower according to Embodiment 1 of the present invention;
Fig. 6 is a right-side view illustrating an operation of a brake pedal mechanism and an operation of a lock mechanism of a mower according to Embodiment 1 of the present invention;
Fig. 7 is a right-side view illustrating an operation of a brake pedal mechanism and an operation of a lock mechanism of a mower according to Embodiment 1 of the present invention;
Fig. 8 is a right-side view illustrating an operation of a brake pedal mechanism and an operation of a lock mechanism of a mower according to Embodiment 1 of the present invention;
Fig. 9 is a right-side view illustrating an operation of a brake pedal mechanism and an operation of a lock mechanism of a mower according to Embodiment 1 of the present invention;

### PREFERRED EMBODIMENTS OF THE INVENTION

Hereinafter, an embodiment in accordance with the present invention will be described with using a mower as an example of a working vehicle.

### (Embodiment 1)

Hereinafter, a description is given of a mower according to Embodiment 1 of the present invention.

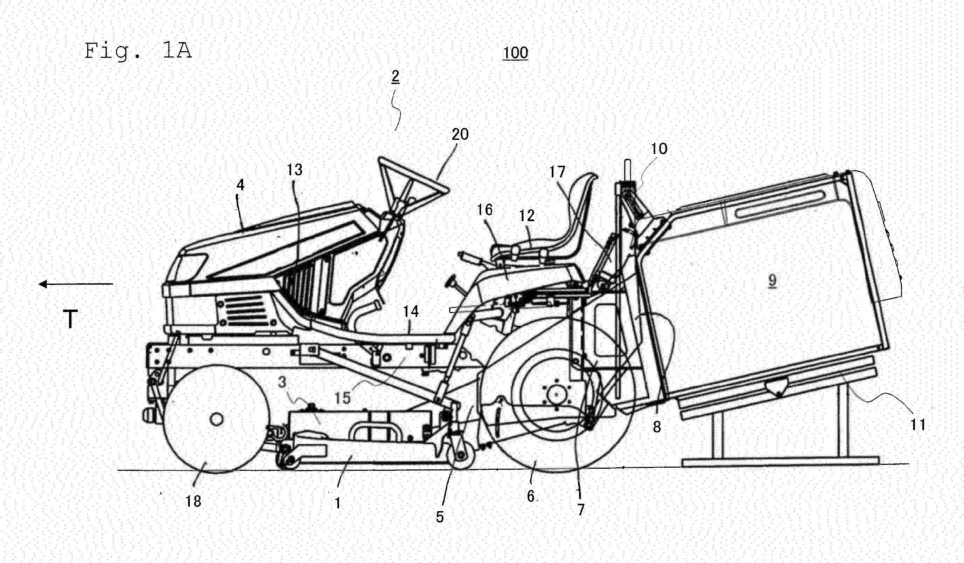

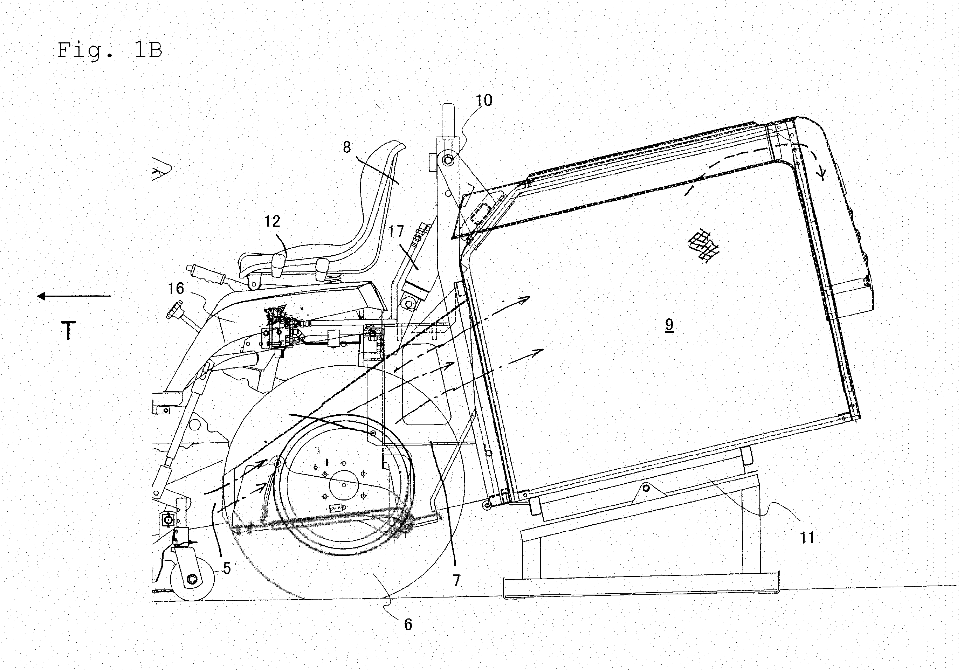

Fig 1A is a left-side view illustrating a mower 100 according to present embodiment 1. Fig 1B is a left-side view illustrating a rear part of the mower 100 according to Embodiment 1 and is a partial enlarged view of Fig 1A. Then, herein, a front direction corresponds to a direction of movement of the mower when grass is mowed (see the arrow T), and a left-right direction corresponds to a left-right direction at the time of turning to a front side on the basis of the direction of movement of the mower. The same applies to the following drawings.

As illustrated in FIG. 1, the mower 100 of the present embodiment 1 is a riding-type mower, and includes: a mower main body 2 on which a worker is seated; and a grass container 9 which is disposed in a rear part of the mower main body 2 and into which mowed grass is collected. In the mower 100 of Embodiment 1 according to the present invention, grass which is mowed by a mower unit 1 disposed below the mower main body 2 for mowing grass is sent to the grass container 9 in the rear part, so that the mowed grass is collected.

First, a configuration of the mower main body 2 will be described.

The mower main body 2 has four wheels, which are two front wheels 18 and two rear wheels 6. Then, the mower main body 2 is provided with a steering wheel 20 for operating the front wheels 18, a driver's seat 12 on which a worker seats, an engine 13 for driving the wheels, and a floor 14 of the driver's seat 12. The engine 13 is disposed in a bonnet 4 ahead of the driver's seat 12. Rear wheel covers 16 which cover upper parts of the rear wheels 6 are disposed in the right and left of the driver's seat 12.

A frame 15 is disposed under the floor 14. Inside the frame 15, a power extraction shaft for taking out an output of the engine 13 is disposed in a front-rear direction. Power is inputted into mower unit 1 through a power transmission belt from the power extraction shaft. Moreover, power is transmitted to the rear wheel 6 through a run transmission shaft, a power transmission case and a hydraulic static transmission (HST), etc from a rear side of the power extraction shaft.

On the other hand, the mower unit 1 includes: a mower deck 3; and blades rotated about longitudinal axis centers thereof at the right and left in the mower deck 3. The blade axes are rotated by the above-mentioned inputted power, so that the right and left blades rotate. Then, the right and left blades rotate in reverse directions to each other, whereby the grass is mowed efficiently.

A grass collecting passage 5 is formed on a central rear side of the mower deck 3, and the grass collecting passage 5 is communicated with the grass container 9 through a duct 7 disposed between the right and left rear wheels 6. The grass container 9 is detachably attached to a grass container attachment frame 8 of the mower main body 2. The grass container 9 is pivoted about a pivot axis 10 disposed at the upper front side thereof in order to discharge clipped grass which is accumulated. The lift cylinder 17 for pivoting the grass container 9 is disposed. In addition, a stand 11 below the grass container 9 is disposed for supporting the grass container 9 when the grass container 9 is detached from the mower main body 2. It is not necessary to dispose the stand 11 at the time of use.

Next, a brake pedal mechanism, parking lock mechanism, etc. which are disposed at the floor 14 of the driver's seat 12 will be described.

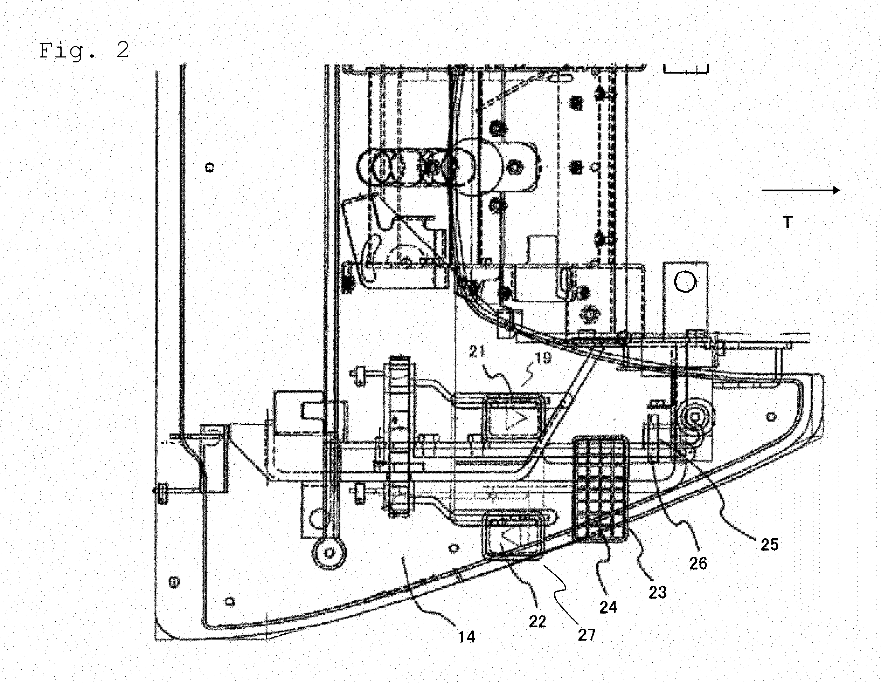

Fig. 2 is a planar configuration view illustrating a right-leaning part of the floor 14. As shown in Fig. 2, at the right-leaning position of the floor 14, a forward pedal step surface part 21 of a forward pedal mechanism 19 for moving the mower forward and the backward pedal step surface part 22 of a backward pedal mechanism 27 for reversing the mower are disposed. That is, the forward pedal step surface part 21 and the backward pedal step surface part 22 are disposed at right side along the direction of movement T of the mower (in a state where the worker sitting on the driver's seat 12 looks).

Moreover, a brake step surface part 24 for stopping the mower is disposed at the front side of the forward pedal step surface part 21 and the backward pedal step surface part 22. The brake step surface part 24 is a part of the brake pedal mechanism 23. A step part for locking 26 of a parking lock mechanism 25 for fixing the brake pedal mechanism 23 in the braking position thereof is disposed at the front side of peripheral edges of the brake step surface part 24. The step part for locking 26 is disposed at a position close to the inside of the brake step unit 24. That is, the step part for locking 26 is disposed at a left-leaning position of the brake step surface part 24 along the direction of movement T of the mower (in a state where the worker sitting on the driver's seat 12 looks).

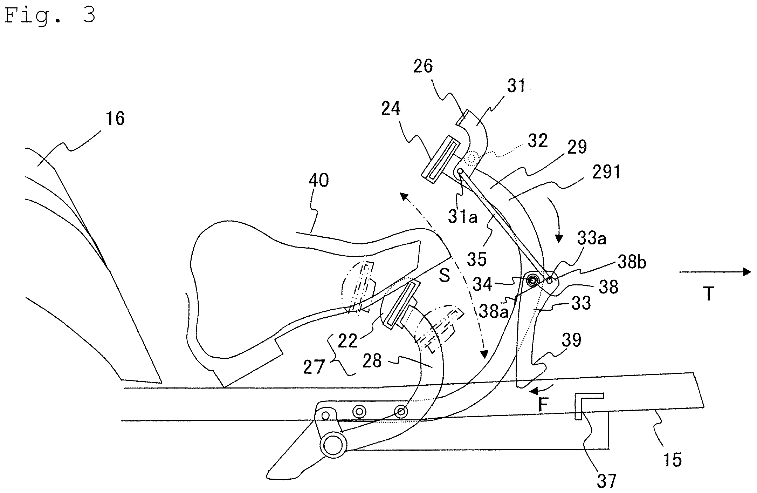

Fig. 3 is a right-side view illustrating a vicinity of the brake pedal mechanism 23. As shown in Fig. 3, the backward pedal mechanism 27 includes: a backward pedal step surface part 22; and a backward pedal lever 28 disposed at the bottom of the backward pedal stop surface part 22. The backward pedal lever 28 is formed to curve with swelling out in a front direction. In addition, the forward pedal mechanism 19 as well as the backward pedal mechanism 27 is constituted. Fig. 3 is a view illustrating a state where the backward pedal step surface part 22 is stepped on with a foot 40. The highest position and the lowest position of the backward pedal step surface part 22 are shown by the two-dot chain line in Fig. 3. The locus S of the tiptoe of the foot 40 is shown by one-dot chain line in Fig. 3.

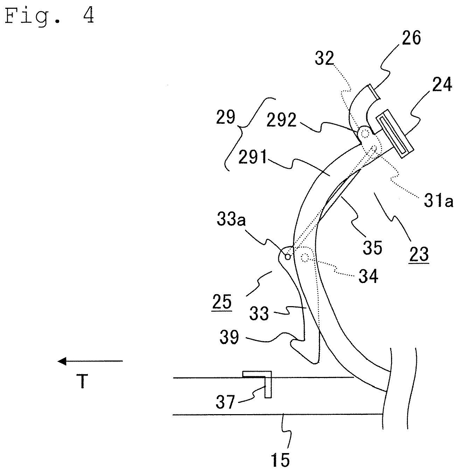

The parking lock mechanism 25 is disposed along the brake pedal lever 29 of the brake pedal mechanism 23. Fig. 4 is a left-side configuration view illustrating the brake pedal mechanism 23 and the parking lock mechanism 25.

As shown in Fig. 3 and Fig. 4, the parking lock mechanism 25 according to the present embodiment 1 includes: the step part for locking 26 which is disposed at the front side of the peripheral edges of the brake step surface part 24; and a first pivot plate 31 which is formed toward the bottom from the step part for locking 26. The first pivot plate 31 is fixed to the brake pedal lever 29 to be pivotable.

As shown in Fig. 4, the brake pedal lever 29 includes: a pedal lever main body 291 which is formed at an arc form in the front-rear direction to swell out in the front direction; and a protrusion part 292 which is formed to protrude forward in a vicinity of the brake step surface part 24.

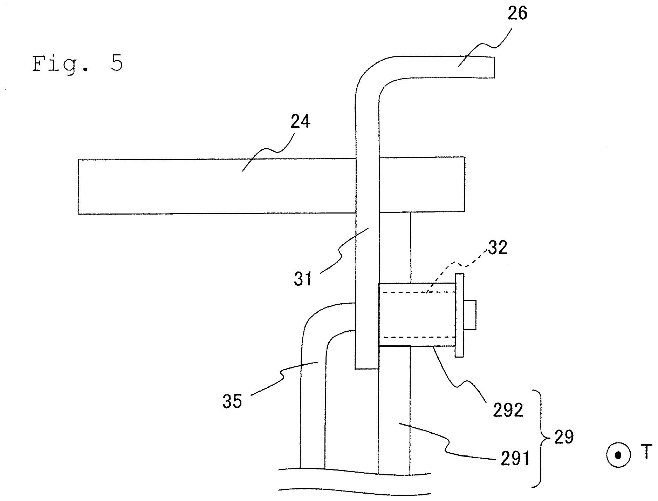

Fig. 5 is a front configuration view illustrating a vicinity of the brake step surface part 24. Judging from the front side, the protrusion part 292 is formed toward right side from the brake pedal lever 29. In the protrusion part 292, a first pivot axis 32 is disposed and the first pivot plate 31 is supported pivotally by the first pivot axis 32. As shown in Fig. 3, at the lower part of the pedal lever main body 291, a second pivot plate 33 is supported pivotally by a second pivot axis 34. A connecting rod 35 is disposed for connecting the first pivot plate 31 and the second pivot plate 33. An engagement part 39, which is an arrow form and protrudes forward, is formed in the lower end of the second pivot plate 33.

A first connecting part 31a at which the connecting rod 35 connects with the first pivot plate 31 is disposed in the rear side compared with the first pivot axis 32 at the backside. A second connecting part 33a at which the connecting rod 35 connects with the second pivot plate 33 is disposed in the front side compared with the second pivot axis 34.

The spring member 38 is disposed at the second pivot axis 34. The one end 38a of the spring member 38 is hooked on the backside of the pedal lever main body 291, and the other end 38b is hooked above the second connecting part 33a, thereby the second connecting part 33a is urged below about the second pivot axis 34. By such a configuration, the engagement part 39 is urged backward (refer to arrow F of Fig. 3).

An engaged part 37 with which the engagement part 39 engages is disposed at the frame 15 below the floor 14.

In addition, in the above explanation, the brake pedal mechanism 23 and the parking lock mechanism 25 are in the state where they are not stepped on.

An example of the lock unit according to the present invention corresponds to the first pivot plate 31, the connecting rod 35, the second pivot plate 33 and the engagement part 39 according to the present embodiment. An example of the link mechanism according to the present invention corresponds to the first pivot plate 31, the connecting rod 35, and the second pivot plate 33 according to the present embodiment. The lever main body of the pedal lever according to the present invention corresponds to the pedal lever main body 291 according to the present embodiment. An example of the forward backward pedal mechanism according to the present invention corresponds to the forward pedal mechanism 19 and the backward pedal mechanism 27 according to the present embodiment.

Next, an operation that the parking lock mechanism 25 locks the brake pedal mechanism 23 at the braking position thereof will be described.

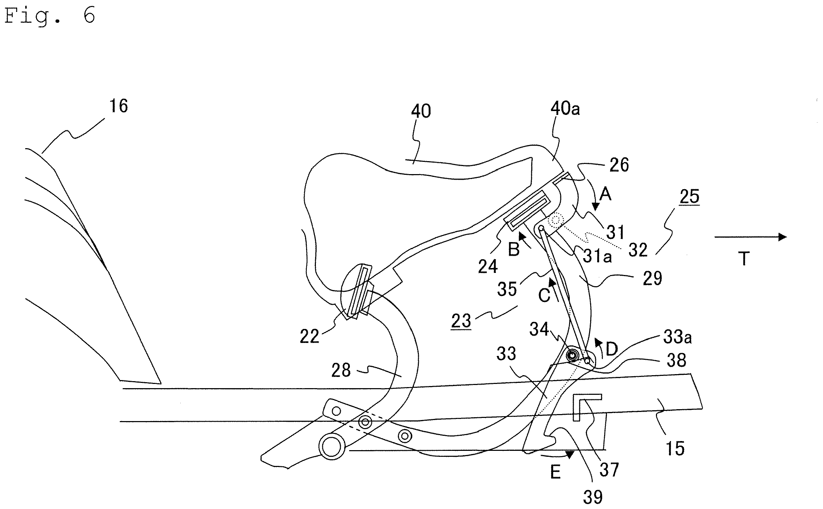

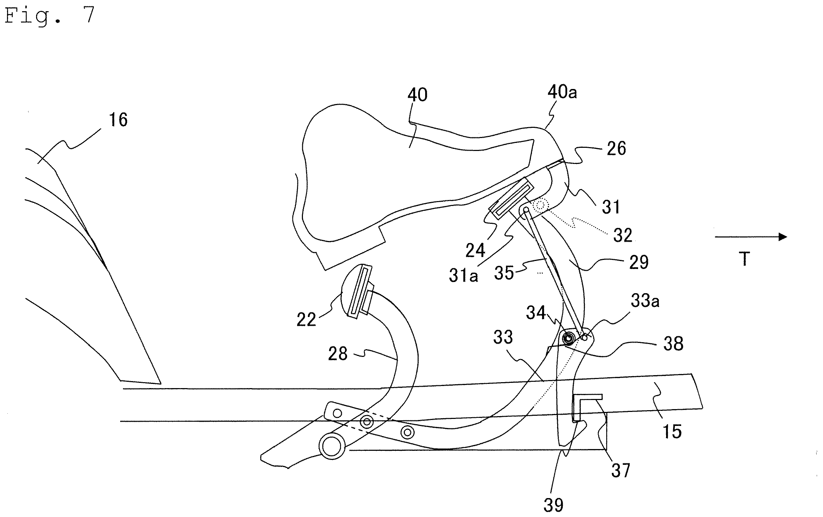

Fig. 6 is a view illustrating a state where the brake step surface part 24 is stepped on and is pushed in on the foot 40. Fig. 7 is a view illustrating a state where the brake pedal mechanism 23 is locked.

As shown in Fig. 6 and Fig. 7, the brake pedal lever 29 is fallen by stepping on with the foot 40, so that the mower stops moving forward or reversing. In the state, the step part for locking 26 is stepped on by the tiptoe 40a of the foot 40. Then, as shown in the arrow A, the step part for locking 26 is pivoted downward about the first pivot axis 32, so that the first connecting part 31a is pivoted upward as shown in the arrow B. The first connecting part 31a is pivoted upward, whereby the connecting rod 35 is moved upward as shown in the arrow C and the second connecting part 33a of the second pivot plate 33 is moved upward (refer to the arrow D). By the upward movement of the second connecting part 33a, the second pivot plate 33 is pivoted counterclockwise about the second pivot axis 34. Then, the engagement part 39 is pivoted in the direction of arrow E. By movement of the foot 40 upward in such a state where the engagement part 39 is pivoted in the direction of arrow E, the engagement part 39 engages with an engaged part 37 formed in the flame 15 as shown in Fig. 7. Thus, the brake step unit 24 is stepped on and the brake pedal mechanism 23 can be fixed in the braking position at which the mower is stopped.

Next, an unlocking operation will be described.

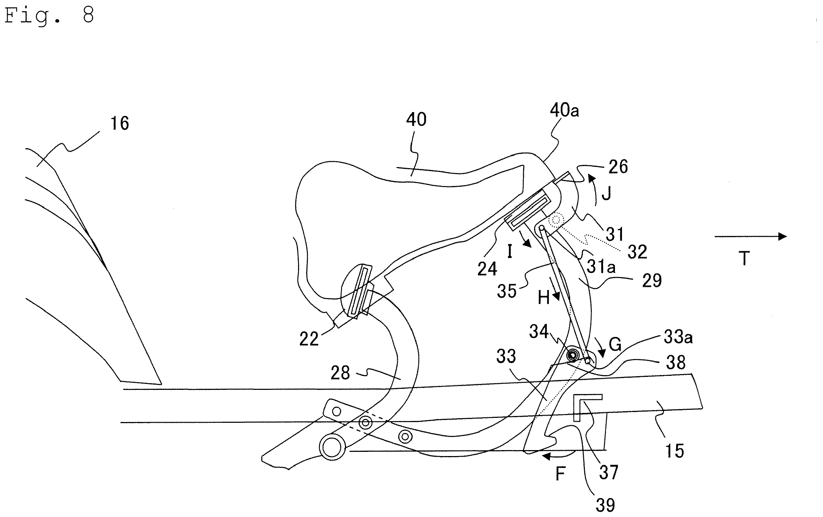

Fig. 8 is a right-side configuration view illustrating a state where the brake pedal mechanism 23 is unlocked.

When the lock is canceled, the brake step surface part 24 is stepped on from the state of Fig. 7 and then the engagement part 39 is moved in the direction of arrow F by the urging force of the spring member 38 as shown in Fig. 8. The engagement part 39 side is pivoted in the direction of arrow F, whereby the second pivot plate 33 is pivoted clockwise and the second connecting part 33a is moved in the direction of arrow G. Then, the connecting rod 35 is moved downward (in the direction of arrow H), and the first connecting part 31a is also pivoted downward (in the direction of arrow I). The first connecting part 31a is pivoted in the direction of arrow I, whereby the first pivot plate 31 is pivoted counterclockwise as shown in Fig. 8, and the step part for locking 26 is pivoted upward as shown in the arrow J and the step part for locking 26 is returned to the original position. And, the worker separates the foot 40 from the brake step surface part 24 and the step part for locking 26, whereby the brake pedal mechanism 23 and the parking lock mechanism 25 are moved upward to be returned to the position before being stepped on with the foot 40 as shown in Fig. 3.

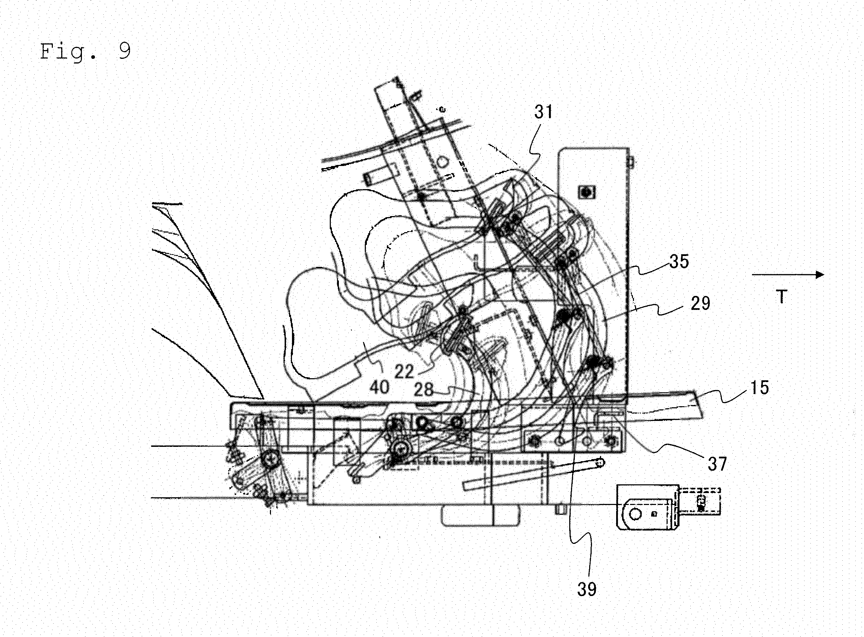

Fig. 9 is a view illustrating a moving state of backward pedal mechanism 27, brake pedal mechanism 23, and the parking lock mechanism 25.

As described above, in the mower according to the present embodiment 1, the step part for locking 26 is operated on the tiptoe 40a of the foot 40 while the brake step surface part 24 is stepped on with the foot 40, whereby the brake pedal mechanism 23 is able to be locked or unlocked at the braking position.

In addition, the worker can operate the brake pedal mechanism 23 and the parking lock mechanism only with a foot while sitting on the driver's seat 12.

In addition, since the step part for locking 26 can be stepped on by the thumb side of a right foot, it is easy to step on.

It is possible to perform a locking operation and an unlocking operation with a simple configuration.

As shown in the locus S of the tiptoe 40a of Fig. 3, the brake pedal mechanism 23 and the parking lock mechanism 25 do not disturb the operation that the forward pedal step surface part 21 and the backward pedal step surface part 22 are stepped on.

When the configuration of the conventional patent document 1 is used, there is fear of malfunction since the locking operation and the unlocking operation can be performed only by the step surface of the brake pedal mechanism being stepped on in a state where the lock lever is operated. However, in the present Embodiment, since the step part for locking 26 is disposed at the front side of the brake step surface part 24, the step part for locking 26 is at a position not to be able to be locked even if the worker steps on the pedal unconsciously, so that an operation mistake is avoidable.

In addition, the brake pedal mechanism 23 and the parking lock mechanism 25 which are explained in the present embodiment 1 are applicable not only to a mower but a tiller, a cultivator, etc. In brief, the brake pedal mechanism 23 and the parking lock mechanism 25 which are explained in the present embodiment 1 are applicable to a working vehicle.

In addition, in the present embodiment, the step part for locking 26 and the first pivot plate 31 are formed by one member, but can be formed by the separate member. The engagement part 39 and the second pivot plate 33 are also formed by one member, but can be formed by the separate member.

In the present embodiment, the step part for locking 26 is disposed above the brake step surface part 24 but does not need to be disposed above it.

In the present embodiment, the brake step surface part 24 is disposed on right side along the direction of movement T of the mower (in a state where the worker sitting on the driver's seat 12 looks) and the step part for locking 26 is disposed at a left-leaning position of the brake step surface part 24, but the position of the brake step surface part 24 and the position of the step part for locking 26 are not restricted to those position.

In the present embodiment, the second connecting part 33a at which the connecting rod 35 connects with the second pivot plate 33 is disposed in the forward side compared with the second pivot axis 34, but can be disposed in the rear side compared with it.

### Industrial Applicability

The parking lock mechanism and the working vehicle using the parking lock mechanism according to the present invention provide an effect that a locking operation and a unlocking operation are easy, and are effectively applied to a riding-type mower, tiller, tractor and the like.

### Reference Signs List

- 1: mower unit
- 2: mower main body
- 3: mower deck
- 4: bonnet
- 5: grass collecting passage
- 6: rear wheel
- 7: duct
- 8: grass container attachment frame
- 9: grass container
- 10: pivot axis
- 11: stand
- 12: driver's seat
- 13: engine
- 14: floor
- 15: frame
- 16: rear wheel cover
- 17: lift cylinder
- 21: forward pedal step surface part
- 22: backward pedal step surface part
- 23: brake pedal mechanism
- 24: brake step surface part
- 25: parking lock mechanism
- 26: step part for locking
- 28: backward pedal lever
- 29: brake pedal lever
- 31: first pivot plate
- 32: first pivot plate
- 33: second pivot plate
- 34: second pivot axis
- 35: connecting rod
- 37: engaged part
- 38: spring member

## Claims

1. A parking lock mechanism (25) used when a working vehicle (2) is parked, the working vehicle (2) comprising:
a step part for locking (26), which is disposed at a front side of a brake step surface part (24) of a brake pedal mechanism (23); and
a lock unit which is connected to the step part for locking (26) and which locks the brake pedal mechanism (23) at a braking position thereof by the step part for locking (26) being stepped on
**characterized in that**
the brake pedal mechanism (23), a forward pedal step surface part (21) of a forward pedal mechanism (19) configurated in order to move the working vehicle forward, and a backward pedal step surface part (22) of a backward pedal mechanism (27)
configurated in order to move the working vehicle backward are disposed on one of a left side floor (14) and a right side floor (14) of a floor (14) with reference to a center position of the floor (14),
the forward pedal step surface part (21) the forward pedal mechanism (19) and the backward pedal step surface part (22) the backward pedal mechanism (27) are arranged in parallel and in a left-right direction,
the brake step surface part (24) is located in the front side of a step surface part (21) of the forward pedal mechanism (19) and the step surface part (22) of the backward pedal mechanism (27), and a pedal lever main body (291) of the brake pedal mechanism (23) is formed to curve with swelling out in a front direction,
the step part for locking (26) is disposed adjacent to a front side edge among peripheral edges of the brake step surface part (24) on a basis of a direction of movement of the working vehicle (2),
the lock unit has an engagement part (39) which engages with an engaged part (37), and a linkage mechanism (31, 33, 35) which connects the engagement part (39) and the step part for locking (26); and the step part for locking (26), the engagement part (39) and the linkage mechanism (31, 33, 35) are held at the pedal lever (29) disposed below the brake step surface part (24),
the engaged part (37) is disposed on a frame (15), which is located below the floor (14), of a main body of the working vehicle (2).

## Patentansprüche

1. Parksperr-Mechanismus (25), der beim Parken eines Arbeitsfahrzeugs (2) verwendet wird, wobei das Arbeitsfahrzeug (2) umfasst:
einen Tritt-Teil (26) zum Sperren, der an einer Vorderseite eines Brems-Trittflächenteils (24) eines Bremspedal-Mechanismus (23) angeordnet ist; sowie
eine Sperr-Einheit, die mit dem Tritt-Teil zum Sperren (26) verbunden ist und die den Bremspedal-Mechanismus (23) in einer Bremsposition desselben sperrt, wenn auf den Tritt-Teil (26) zum Sperren getreten wird,
**dadurch gekennzeichnet, dass**
der Bremspedal-Mechanismus (23), ein Vorwärtspedal-Trittflächenteil (21) eines Vorwärtspedal-Mechanismus (19), der dazu eingerichtet ist, das Arbeitsfahrzeug vorwärts zu bewegen, und ein Rückwärtspedal-Trittflächenteil (22) eines Rückwärtspedal-Mechanismus (27), der dazu eingerichtet ist, das Arbeitsfahrzeug rückwärts zu bewegen, an einem linken Boden (14) oder einem rechten Boden (14) eines Bodens (14) in Bezug auf eine Mittelposition des Bodens (14) angeordnet sind,
der Vorwärtspedal-Trittflächenteil (21), der Vorwärtspedal-Mechanismus (19), der Rückwärtspedal-Trittflächenteil (22) und der Rückwärtspedal-Mechanismus (27) parallel und in einer Links-Rechts-Richtung angeordnet sind,
der Brems-Trittflächenteil (24) sich an der Vorderseite eines Trittflächenteils (21) des Vorwärtspedal-Mechanismus (19) und des Trittflächenteils (22) des Rückwärtspedal-Mechanismus (27) befindet, und ein Pedalhebel-Hauptkörper (291) des Bremspedal-Mechanismus (23) so ausgebildet ist, dass er mit einer Wölbung nach außen in einer Vorwärtsrichtung gekrümmt ist,
der Tritt-Teil (26) zum Sperren an eine in einer Bewegungsrichtung des Arbeitsfahrzeugs (2) vordere Seitenkante von Umfangskanten des Brems-Trittflächenteils (24) angrenzend angeordnet ist,
die Sperr-Einheit einen aktiven Eingriffsteil (39), der mit einem passiven Eingriffsteil (37) in Eingriff kommt, sowie einen Verbindungs-Mechanismus (31, 33, 35) aufweist, der den aktiven Eingriffsteil (39) und den Tritt-Teil (26) zum Sperren verbindet; und der Tritt-Teil (26) zum Sperren, der aktive Eingriffsteil (39) sowie der Verbindungs-Mechanismus (31, 33, 35) an dem unterhalb des Brems-Trittflächenteils (24) angeordneten Pedalhebel (29) gehalten werden,
der passive Eingriffsteil (37) an einem unterhalb des Bodens (14) befindlichen Rahmen (15) eines Hauptkörpers des Arbeitsfahrzeugs (2) angeordnet ist.

## Revendications

1. Mécanisme de blocage de stationnement (25) utilisé lorsqu'un véhicule de travail (2) est stationné, le véhicule de travail (2) comprenant :
une partie d'étage pour blocage (26), qui est disposée sur un côté avant d'une partie de surface d'étage de frein (24) d'un mécanisme de pédale de frein (23) ; et
une unité de blocage qui est reliée à la partie d'étage pour blocage (26) et qui bloque le mécanisme de pédale de frein (23) dans une position de freinage de celui-ci par la partie d'étage pour verrouillage (26) qui est étagée dessus
**caractérisé en ce que**
le mécanisme de pédale de frein (23), une partie de surface d'étage de pédale avant (21) d'un mécanisme de pédale avant (19) configuré pour déplacer le véhicule de travail vers l'avant, et une partie de surface d'étage de pédale arrière (22) d'un mécanisme de pédale arrière (27) configuré pour déplacer le véhicule de travail vers l'arrière sont disposés sur l'un parmi un plancher côté gauche (14) et un plancher côté droit (14) d'un plancher (14) en référence à une position centrale du plancher (14),
la partie de surface d'étage de pédale avant (21) du mécanisme de pédale avant (19) et la partie de surface d'étage de pédale arrière (22) du mécanisme de pédale arrière (27) sont disposées en parallèle et dans une direction gauche-droite,
la partie de surface d'étage de frein (24) est située sur le côté avant d'une partie de surface d'étage (21) du mécanisme de pédale avant (19) et de la partie de surface d'étage (22) du mécanisme de pédale arrière (27), et un corps principal de levier de pédale (291) du mécanisme de pédale de frein (23) est formé pour s'incurver avec gonflement dans une direction avant,
la partie d'étage pour blocage (26) est disposée de manière adjacente à un bord côté avant parmi des bords périphériques de la partie de surface d'étage de frein (24) sur la base d'une direction de déplacement du véhicule de travail (2),
l'unité de blocage a une partie de prise (39) qui vient en prise avec une partie mise en prise (37), et un mécanisme de liaison (31, 33, 35) qui relie la partie de prise (39) et la partie d'étage pour blocage (26) ; et la partie d'étage pour blocage (26), la partie de prise (39) et le mécanisme de liaison (31, 33, 35) sont maintenus au niveau du levier de pédale (29) disposé sous la partie de surface d'étage de frein (24),
la partie mise en prise (37) est disposée sur un châssis (15), qui est situé sous le plancher (14), d'un corps principal du véhicule de travail (2).
